Europäisches Patentamt

European Patent Office

Office européen des brevets

(19)

(11) Numéro de publication : **0 463 892 A1**

## (12) DEMANDE DE BREVET EUROPEEN

(21) Numéro de dépôt : **91401304.0**

(22) Date de dépôt : **21.05.91**

(51) Int. Cl.$^5$ : **H02M 3/335**

(30) Priorité : **22.05.90 FR 9006389**

(43) Date de publication de la demande :
**02.01.92 Bulletin 92/01**

(84) Etats contractants désignés :
**CH DE ES FR GB IT LI SE**

(71) Demandeur : **THOMSON-BRANDT
ARMEMENTS
Tour Chenonceaux 204, rond-point du Pont de
Sèvres
F-92516 Boulogne-Billancourt (FR)**

(72) Inventeur : **Bansard, Joel
THOMSON-CSF, SCPI, Cédex 67
F-92045 Paris la Défense (FR)**

(74) Mandataire : **Albert, Claude et al
THOMSON-CSF SCPI
F-92045 PARIS LA DEFENSE CEDEX 67 (FR)**

(54) **Convertisseur basse tension-haute tension.**

(57)     L'invention concerne un convertisseur basse tension-haute tension du type à retour rapide.
    Ce convertisseur comprend un transformateur (T) dont le primaire est relié à la tension d'alimentation $U_A$ par l'intermédiaire d'un interrupteur (Q) et dont le secondaire est relié aux bornes d'un condensateur (C) par l'intermédiaire d'une diode de redressement (CR). Ce convertisseur comprend de manière classique une boucle de régulation secondaire comparant la tension de sortie, par l'intermédiaire d'un pont diviseur (R1, R2), à une tension de consigne pour réguler le temps d'ouverture ($T_{off}$) de l'interrupteur. On prévoit de maintenir constants l'énergie primaire accumulée dans le transformateur quelle que soit la tension $U_A$ et le temps de charge total du condensateur. Pour cela on utilise des moyens de commande numérique (11, 8', 90 à 92) pour asservir en boucle ouverte le temps de fermeture ($T_{on}$) de l'interrupteur (Q) à la valeur de la tension d'alimentation et à la température fournie par un capteur (10).
    L'invention s'applique notamment à des systèmes de mise à feu à haute énergie.

Fig.3

La présente invention se rapporte à un convertisseur basse tension-haute tension du type à retour rapide.

Dans de nombreux cas où on ne dispose que d'une source d'alimentation en énergie à basse tension, par exemple dans le cas de matériels portés, on peut néanmoins avoir besoin d'une alimentation haute tension. C'est par exemple le cas de munitions dans lesquelles la mise à feu se fait par inflammateur qui nécessite pour la mise à feu une impulsion de courant de forte amplitude délivrée pendant un temps très court (par exemple un courant de 3 à 5 kA pendant un temps compris entre 0,1 et 0,5 $\mu s$). Dans ce cas là, on a besoin d'un système d'alimentation à haute tension chargeant un réservoir d'énergie tel qu'un condensateur qui doit ensuite être déchargé très rapidement, par exemple au moyen d'un commutateur statique tel qu'un éclateur commandé.

Pour élaborer cette haute tension et charger le condensateur, on utilise un convertisseur basse tension-haute tension qui transforme la tension de bord en haute tension. Pour des raisons de faisabilité du transformateur du convertisseur, c'est-à-dire pour pouvoir utiliser un rapport de transformation facilement réalisable ainsi qu'on le verra plus en détail dans la suite de la description, il est apparu nécessaire d'utiliser un convertisseur basse tension-haute tension du type à retour rapide ( "flyback converter" dans la littérature anglo-saxonne). Ce type de convertisseur met à profit la surtension obtenue lorsqu'on ouvre le circuit primaire du transformateur à l'aide d'un interrupteur.

Le principe de ces convertisseurs est qu'on accumule de l'énergie dans le noyau magnétique du transformateur pendant tout le temps $T_{on}$ où l'interrupteur du circuit primaire est fermé et que cette énergie est restituée dans le circuit secondaire pour la charge d'un condensateur pendant le temps $T_{off}$ où l'interrupteur est ouvert.

Dans la plupart des convertisseurs de ce type connus, le temps de fermeture $T_{on}$ de l'interrupteur est constant et on module le temps d'ouverture $T_{off}$ à l'aide d'une boucle de régulation secondaire qui fonctionne par comparaison de la tension de sortie obtenue avec une valeur de consigne.

Cependant, malgré ses avantages, un convertisseur de ce type présente des problèmes de réalisation lorsque la tension d'alimentation basse tension peut varier dans de larges limites, comme c'est en particulier le cas lorsque la source d'énergie est une pile ou une batterie qui fournit une tension largement variable selon son état plus ou moins déchargé. En effet, dans ce cas, comme le temps $T_{on}$ est constant par principe, l'énergie primaire accumulée varie dans de grandes proportions et donc aussi le temps de charge du condensateur à chaque cycle. On est ainsi amené à un dimensionnement défavorable du convertisseur qui doit être adapté à un temps de charge maximum lorsque la tension d'alimentation est minimum, le composant le plus sollicité étant le transformateur pour lequel on doit par ailleurs éviter d'atteindre la saturation lorsque la tension d'alimentation a sa valeur maximum.

Pour remédier à cet inconvénient, il a été proposé dans le brevet US 3 916 281 de faire fonctionner un tel convertisseur avec une énergie primaire accumulée dans le transformateur constante durant chaque temps de fermeture $T_{on}$. Pour cela, le brevet mentionné ci-dessus propose de réguler ce temps de fermeture en fonction du courant primaire circulant dans l'enroulement primaire du transformateur. Ce mode de régulation permet au transformateur de fonctionner dans les conditions sensiblement nominales quelle que soit la valeur de la tension d'alimentation.

Cependant, notamment dans le cas de l'utilisation de la haute tension pour la mise à feu d'une munition, il peut être très important que le temps de charge du condensateur réservoir d'énergie soit parfaitement constant et connu à l'avance quelles que soient les valeurs de paramètres tels que la tension d'alimentation réelle ou la température, en particulier pour des raisons de sécurité.

Par ailleurs, dans une telle application où il ne faut pas créer d'appels de courant élevés sur l'alimentation qui est commune à plusieurs équipements de diverses natures, on doit prévoir une inductance du transformateur qui soit faible. D'ou des temps $T_{on}$ très courts (par exemple de l'ordre de la microseconde ou même moins). Ainsi, si l'on utilise une boucle fermée d'asservissement sur le courant primaire, il est nécessaire de prévoir pour constituer la boucle une électronique (amplificateur opérationnel, ...) de performances élevées en rapidité. Ce qui entraîne un matériel complexe, de mise au point délicate et donc coûteux.

Un premier objet de l'invention est donc un convertisseur basse tension-haute tension répondant à ces exigences et de fabrication simple et peu coûteuse grâce à l'utilisation d'un dispositif numérique opérant en boucle ouverte.

Un autre objet de l'invention est un convertisseur contrôlé par un microcontrôleur numérique.

Selon un premier aspect de l'invention, il est prévu un convertisseur basse tension-haute tension du type à retour rapide comportant un transformateur de faible inductance dont le primaire est relié par l'intermédiaire d'un interrupteur à une source de tension d'alimentation $U_A$ et dont le secondaire est relié aux bornes d'un condensateur par l'intermédiaire d'une diode de redressement, le convertisseur comprenant en outre des moyens de régulation secondaire qui comparent la tension de sortie aux bornes du condensateur à une première tension de consigne et des moyens de régulation primaire qui régulent le temps de fermeture $T_{on}$ de l'interrupteur de manière à maintenir sensiblement constante l'énergie primaire accumulée dans le transformateur durant chaque temps de fermeture $T_{on}$, ledit convertisseur étant caractérisé en ce qu'il comporte des moyens de commande numérique régulant en boucle ouverte les temps de fermeture et d'ouverture de l'interrupteur à partir des informations fournies par lesdits moyens de régulation primaire et secondaire, de manière que le temps de charge total du condensateur jusqu'à ladite tension de consigne soit égal à une valeur fixe prédéterminée.

Par ailleurs, un des problèmes rencontrés lorsqu'un convertisseur basse tension-haute tension est utilisé dans un environnement comprenant d'autres équipements électriques est la réduction de la pollution électromagnétique. Or, un tel convertisseur opère à partir de la commutation du courant d'alimentation et provoque donc l'apparition de parasites puissants. Une solution à ce problème consiste à effectuer un filtrage d'entrée sur l'alimentation du convertisseur. Malheureusement, les convertisseurs connus sont régulés de telle sorte que les temps de fermeture $T_{on}$ et d'ouverture $T_{off}$ des commutateurs varient en fonction des paramètres et conduisent à des fréquences de découpage variables dans de larges limites. Ceci rend le filtrage difficile et complexe.

L'invention propose donc en outre de contrôler la régulation du convertisseur de telle manière que la fréquence de découpage soit sensiblement fixe et prédéterminée. Il est clair qu'ainsi le filtrage sera très simplifié puisqu'il suffira d'un filtre à bande étroite centré sur lesdites fréquences prédéterminées.

Selon un autre aspect de l'invention, il est donc prévu un convertisseur basse tension-haute tension du type indiqué ci-dessus dans lequel lesdits moyens de commande numérique comprennent principalement un microcontrôleur, caractérisé en ce que ledit microcontrôleur comprend des moyens générateurs d'intervalle de temps pour déterminer lesdites valeurs de commande $T_{on}$ et $T_{off}$ finales de manière que la période de découpage imposée audit interrupteur soit sensiblement constante.

L'invention sera mieux comprise et d'autres caractéristiques et avantages apparaîtront à l'aide de la description ci-après et des dessins joints où :

– la figure 1 représente le schéma d'un convertisseur basse tension-haute tension du type à retour rapide connu appliqué à la mise à feu par inflammateur à haute énergie ;

– la figure 2 est le schéma de principe d'une première variante de convertisseur amélioré selon un principe connu ;

– la figure 3 montre le schéma détaillé des boucles de régulation du convertisseur de la figure 2 ;

– la figure 4 est le schéma de principe d'un convertisseur selon l'invention ;

– la figure 5 est un schéma d'un mode de réalisation d'un convertisseur selon l'invention ;

– la figure 6 montre le schéma détaillé fonctionnel d'une partie du convertisseur de la figure 5 ;

– la figure 7 représente un diagramme explicatif du fonctionnement du convertisseur selon l'invention ; et

– la figure 8 est un diagramme illustrant la souplesse d'utilisation du convertisseur selon l'invention.

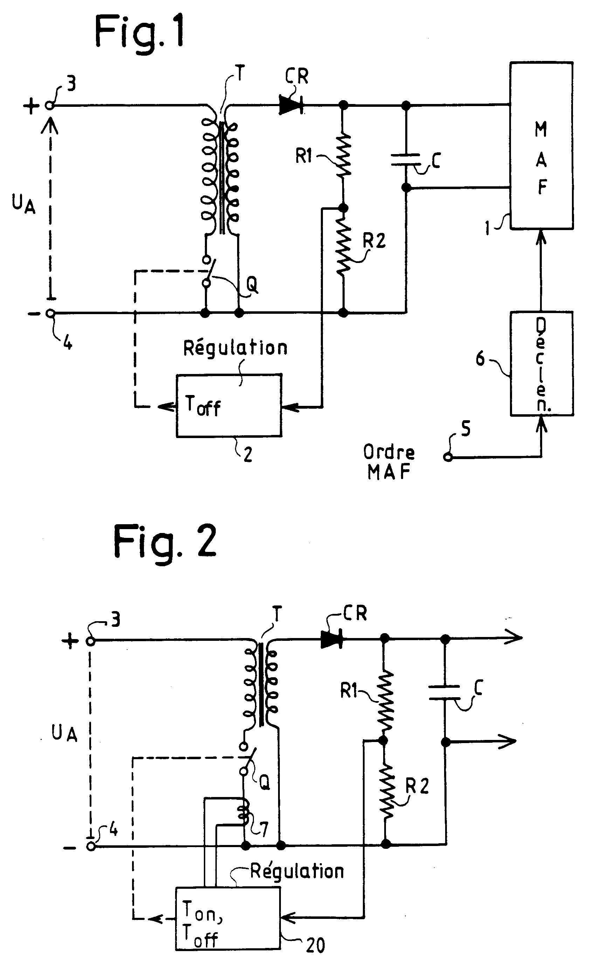

Sur la figure 1 est représenté le schéma d'un convertisseur connu de type à retour rapide ("flyback") pour une commande de mise à feu par inflammateur à haute énergie.

On dispose à bord de la munition d'une source d'alimentation basse tension $U_A$. On veut fournir à un dispositif de mise à feu 1 à "inflammateur" un courant de l'ordre de 3 à 5 kA pendant un temps très bref à partir d'un condensateur C réservoir d'énergie chargé à une haute tension, par exemple comprise entre 2 et 4 kV. Le disposltif de mise à feu est par exemple constitué d'un inflammateur connecté aux bornes du condensateur par un interrupteur statique formé par un éclateur commandé par un circuit de déclenchement 6 recevant l'ordre de mise à feu appliqué sur la borne 5.

Pour charger le condensateur C à une haute tension, on utilise donc un convertisseur à retour rapide comportant un transformateur T dont l'enroulement primaire est relié aux bornes 3, 4 d'application de la tension d'alimentation $U_A$ par l'intermédiaire d'un interrupteur Q représenté schématiquement mais qui peut être constitué par exemple par un transistor. L'enroulement secondaire du transformateur T est relié aux bornes du condensateur C par l'intermédiaire d'une diode de redressement CR. Un pont diviseur de résistances R1, R2 est connecté en parallèle aux bornes du condensateur C pour prélever une tension proportionnelle à la tension de sortie aux bornes de C. Cette tension proportionnelle est envoyée à une boucle de régulation secondaire 2 qui la compare à une valeur de consigne et régule en conséquence le temps d'ouverture $T_{off}$ de l'interrupteur Q. Le fonctionnement est le suivant.

On veut une tension de sortie égale au moins à la valeur de consigne pour la tension d'alimentation la plus basse. Dans les convertisseurs classiques de type direct, il faudrait donc un rapport de transformation de l'ordre de 200 si la tension d'alimentation minimum est de 15 V, ce qui est très difficilement réalisable. On a donc choisi un convertisseur à retour rapide utilisant la surtension primaire obtenue lors d'une ouverture très rapide de l'interrupteur Q. Cette surtension pouvant atteindre quelques centaines de volts, on peut se contenter d'un rapport de transformation de l'ordre de quelques dizaines, ce qui est beaucoup plus facilement réalisable.

Pendant la fermeture de l'interrupteur Q, le courant primaire permet d'accumuler dans le noyau magnétique du transformateur T l'énergie primaire Ep :

$$E_p = 1/2\, L_p\, I^2_{max}$$

où $L_p$ est l'inductance du primaire et $I_{max}$ est la valeur maximum atteinte par le courant primaire. Au moment de l'ouverture de l'interrupteur Q, on génère une tension

$$E = -\frac{d\Phi}{dt}$$

où le flux $\Phi$ est proportionnel au courant. Il faut que dt soit le plus faible possible (de l'ordre de quelques dizaines de nanosecondes). Au secondaire apparaît alors la tension E x n où n est le rapport de transformation. Cette tension est redressée par la diode Cr.

Par principe dans un tel convertisseur à retour rapide, le temps de fermeture $T_{on}$ pendant lequel on accumule l'énergie $E_p$ est constant et on module le temps d'ouverture $T_{off}$ de l'interrupteur à l' aide de la boucle de régulation secondaire.

Cette modulation peut être du type tout ou rien en comparant la tension du diviseur potentiométrique à une valeur de consigne, ce qui permet une réalisation particulièrement simple.

Cependant l'énergie $E_p$ accumulée pendant un temps de fermeture $T_{on}$ constant varie beaucoup en fonction de la valeur $I_{max}$ qui elle-même dépend de la valeur de $T_{on}$ et de la valeur de la tension d'alimentation $U_A$.

D'ou l'obligation de prendre garde de ne pas atteindre la saturation du transformateur T lorsque la tension d'alimentation est à sa valeur maximale.

Sur la figure 2, on a représenté le schéma d'un convertisseur à retour rapide qui fonctionne à énergie primaire $E_p$ constante de façon que le transformateur T fonctionne toujours dans les conditions nominales, ce qui permet de l'optimiser. Dans le schéma de la figure 2, on obtient ce résultat en prévoyant une boucle de régulation primaire basée sur un asservissement du courant $I_{max}$.

Pour cela, on prévoit dans le circuit primaire un capteur de courant 7 et on régule la valeur du temps de fermeture $T_{on}$ pour avoir $I_{max}$ constant, donc l'énergie primaire accumulée constante, grâce à un dispositif de régulation 20.

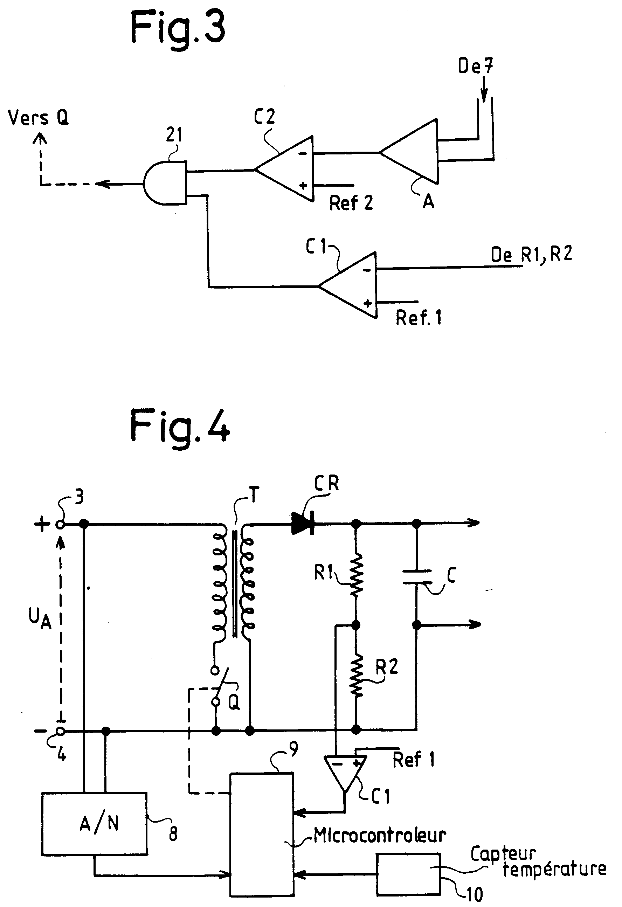

Ce dispositif est représenté plus en détail sur la figure 3. La sortie du capteur 7 est envoyée à un amplificateur A pour augmenter la dynamique du signal. La sortie de l'amplificateur A est appliquée à une entrée d'un comparateur C2 dont l'autre entrée reçoit une tension de consigne Ref 2. La sortie du comparateur C2 qui fournit un signal logique haut ou bas selon que le courant primaire I est inférieur ou supérieur à une valeur de consigne prédéterminée est reliée à une première entrée d'une porte ET 21.

Le signal venant du pont diviseur R1, R2 est appliqué à un comparateur C1 qui reçoit d'autre part une tension de consigne Ref 1. La sortie de ce comparateur qui fournit également un signal logique est reliée à l'autre entrée de la porte ET 21. Le signal de sortie de la porte ET commande l'interrupteur Q.

Tant que la tension aux bornes du condensateur C est supérieure à la valeur de consigne, la tension du diviseur R1, R2 est supérieure à Ref 1 et le comparateur C1 fournit un signal de niveau bas qui bloque la porte ET 21. L'interrupteur Q reste alors constamment en position ouverte et le convertisseur ne consomme aucun courant d'alimentation. Dès que la tension du diviseur tombe en dessous de la tension de consigne, le signal de niveau haut de C1 autorise la porte ET 21 qui permet alors à la boucle de régulation primaire de fonctionner. L'interrupteur Q va se fermer jusqu'à ce que le courant I atteigne la valeur $I_{max}$ désirée, moment à partir duquel le comparateur C2 va commander l'ouverture rapide de l'interrupteur Q. La régulation va continuer jusqu'à ce que la tension aux bornes de C redevienne supérieure à la valeur prédéterminée choisie.

On a ainsi un convertisseur très simple fournissant une bonne régulation quelque soit la tension d'alimentation $U_A$ et sans qu'il soit besoin d'effectuer une régulation préalable de $U_A$, source de pertes importantes et d'une complexité accrue.

Cependant ce type de convertisseur, comme on l'a déjà expliqué, peut présenter certains inconvénients lorsque l'on veut l'utiliser pour un dispositif de mise à feu par inflammateur à haute énergie. D'une part le temps de charge total du condensateur varie de manière appréciable en fonction de la valeur de la tension d'alimentation et de la température, ce qui est très gênant du point de vue de la sécurité d'utilisation. En effet, ce temps variable oblige à accroître la distance de sécurité à partir de laquelle la munition concernée peut être dans l'état armé, donc augmente la distance minimum d'interception. D'autre part, dans ce type d'application, il faut prévoir une inductance du transformateur faible, donc des temps de fermeture de l'interrupteur très courts, ce qui implique pour l'électronique utilisée avec des boucles d'asservissement fermées des performances très élevées et une mise au point complexe et délicate.

La figure 4 illustre le principe de l'Invention selon lequel on obtient de fonctionner à énergie primaire $E_p$ sensiblement constante en asservissant le temps de fermeture $T_{on}$ de l'interrupteur Q à la valeur de la tension d'alimentation $U_A$ par un dispositif en boucle ouverte. Pour ce faire, il est possible d'adopter des méthodes analogiques ou numériques. Les méthodes analogiques bien que réalisables sont plus complexes à mettre en oeuvre en raison notamment des dérives en température des composants. Sur la figure 4, on a donc représenté le schéma d'une méthode numérique.

La tension d'alimentation $U_A$ est prélevée directement à l'entrée du convertisseur à retour rapide et est convertie en une valeur numérique par un convertisseur analogique numérique 8. Cette valeur numérique de $U_A$ ainsi que le signal logique fourni par le comparateur C1 de la boucle de régulation secondaire sont envoyés à un microcontrôleur 9. Celui-ci fournit à partir des signaux qu'il reçoit les valeurs optimisées de commande de l'interrupteur Q. Une façon très simple de réaliser le microcontrôleur 9 est d'utiliser une mémoire par exemple de type mémoire morte dans laquelle on stocke les valeurs de $T_{on}$ optimales pour chaque valeur de $U_A$ et d'adresser cette mémoire par la valeur de $U_A$ fournie par le convertisseur 8. Le grand avantage d'une telle structure est qu'on peut prévoir un adressage de la mémoire en fonction de paramètres complémentaires tels que la température mesurée par un capteur 10.

Les valeurs stockées dans la mémoire peuvent aussi être déterminées préalablement en analysant le comportement du convertisseur dans une phase d'apprentissage puis de programmation de la mémoire permettant de prendre en compte les imprécisions des éléments du convertisseur ainsi que les dérives.

Une telle solution a l'avantage d'être très peu coûteuse car ne nécessitant pas de composants précis, pouvant être intégrée et utilisant un transformateur constamment dans les conditions nominales.

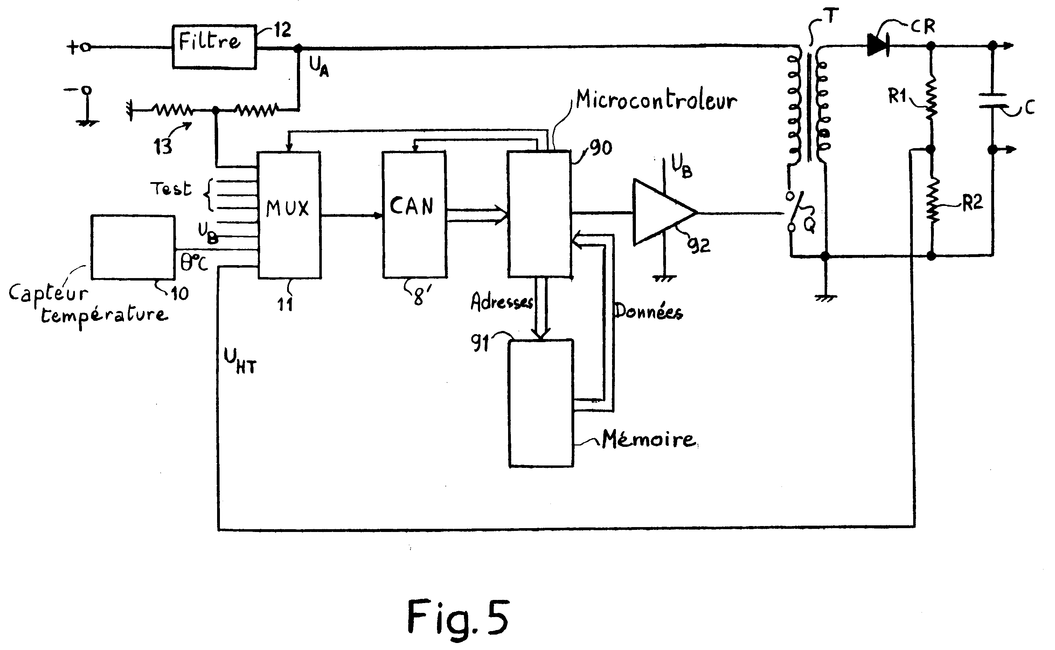

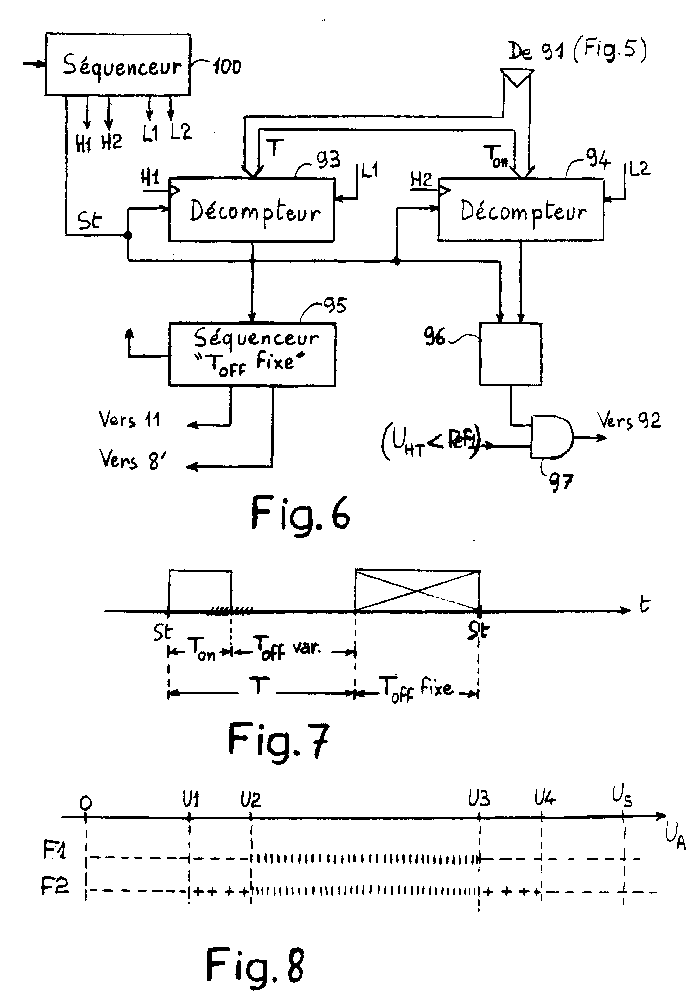

La figure 5 montre le schéma d'un mode de réalisation particulièrement avantageux selon le principe précédent.

Les mêmes éléments que dans les figures précédentes sont désignés par les mêmes références. En plus des composants principaux du convertisseur (transformateur T, interrupteur Q, diode CR, condensateur C, pont de résistance R1, R2), il est prévu des moyens de commande numérique. Ces moyens de commande comprennent un multiplexeur 11 dont la sortie est reliée à un convertisseur analogique-numérique 8′ lui-même relié à un microcontrôleur 90. Ce microcontrôleur est associé à une mémoire morte 91, du type EEPROM de préférence, et sa sortie fournit les signaux de commande d'ouverture et de fermeture à l'interrupteur Q par l'intermédiaire d'un étage tampon 92 recevant une tension d'alimentation $U_B$.

Le multiplexeur 11 reçoit sur ses entrées d'une part une tension proportionnelle à la tension d'alimentation $U_A$ par l'intermédiaire d'un pont diviseur 13, d'autre part une tension $U_{HT}$ proportionnelle à la haute tension de sortie par l'intermédiaire du pont diviseur R1, R2, enfin une mesure de la température θ fournie par le capteur de température 10. Le multiplexeur 11 comporte aussi d'autres entrées qui ne concernent pas directement l'invention mais sont prévues pour recevoir des valeurs de fabrication que le microcontrôleur contrôle lors de la fabrication ( tensions telle que $U_B$, valeurs de test ... ).

En ce qui concerne les informations impliquées par l'invention et énumérées ci- dessus, le multiplexeur 11 permet leur application séquentielle au convertisseur analogique-numérique 8′ qui les code et les transforme successivement en informations numériques. Ces informations sont envoyées au microcontrôleur 90 qui les utilise pour adresser la mémoire 91. Celle-ci contient des tableaux de valeurs de temps de fermeture $T_{on}$ de l'interrupteur Q qui ont été prédéterminés en fonction de la tension d'alimentation $U_A$ et de la température θ de manière à assurer un temps total de charge $T_C$ du condensateur C jusqu'à la haute tension souhaitée qui soit constant. Comme on l'a vu, ceci est important pour l'efficacité d'une munition utilisant un tel convertisseur.

Les avantages d'un tel dispositif sont évidents : fonctionnant en boucle ouverte, il n'exige pas de composants de boucle à haute performance ; entièrement numérique, il est extrêmement simple à réaliser et à mettre en oeuvre car n'exigeant qu'un petit nombre de composants et de précision faible, le dispositif pouvant lui-même compenser les écarts lors d'une phase d'apprentissage ; très souple car permettant la programmation du système en modifiant les paramètres inscrits dans la mémoire. De plus, ce dispositif permet la prise en compte de paramètres supplémentaires tels que la température.

Ainsi qu'on l'a déjà mentionné, il est important d'autre part de ne pas créer de perturbations électromagnétiques gênantes pour les équipements situés à proximité. Or le convertisseur décrit est un dispositif à découpage et il est donc indispensable de disposer à l'entrée, sur la tension d'alimentation, un filtre 12 pour éliminer les parasites à la fréquence de découpage.

Mais, dans les convertisseurs connus, cette fréquence est essentiellement variable en fonction des divers paramètres. D'où la nécessité de filtres relativement complexes.

Selon un autre aspect de l'invention, on détermine les temps d'ouverture et de fermeture de l'interrupteur Q de manière à assurer en plus une période de découpage constante pour une température donnée, la période variant seulement, mais dans une faible proportion, lorsque la température varie. Le grand avantage est que l'on peut alors utiliser un filtre 12 à bande étroite déterminée à l'avance par les caractéristiques du convertisseur. Pour cela, comme le temps de fermeture $T_{on}$ varie en fonction des paramètres $U_A$ et θ, il faut faire varier de manière concomitante le temps d'ouverture $T_{off}$ pour obtenir une somme $T_{on} + T_{off}$ constante.

La figure 7 est un diagramme en fonction du temps illustrant la solution choisie, sans que cela soit limitatif. Pour coder les informations de tension d'alimentation, de température et de tension $U_{HT}$, le multiplexeur 11 et le convertisseur 8′ exigent (pour chaque période) un intervalle de temps fixe qu'on appelle "$T_{off}$ fixe" puisqu'il constitue une partie du temps d'ouverture $T_{off}$ de l'interrupteur. Par ailleurs, le temps $T_{on}$ est déterminé en fonction des paramètres et stocké dans la mémoire 91. Il commence à un instant de démarrage St et se termine à un instant variable (schématisé par une zone hachurée).

On se fixe un intervalle de temps T prédéterminé qui, additionné au temps "$T_{off}$ fixe", donne la période de découpage constante souhaitée.

A partir de là, on peut alors déterminer un temps "$T_{off}$ variable" qui est la différence $T - T_{on}$.

Le temps $T_{off}$ d'ouverture de l'interrupteur Q est alors la somme des temps $T_{off}$ variable et $T_{off}$ fixe. La période de découpage entre deux signaux St successifs est ainsi maintenue constante quelle que soit la valeur $T_{on}$ qui est choisie par la mémoire 91 et le microcontrôleur 90.

Comme le temps T est en fait variable (dans de faibles proportions) avec la température, il est stocké comme le temps $T_{on}$ dans la mémoire 91. Ainsi, la mémoire 91 est organisée comme suit. Elle contient des tableaux de valeurs de $T_{on}$. Chaque tableau est adressé par des bits d'adresse correspondant à la température θ (par exemple bits de poids forts de l'adresse ). A l'intérieur de chaque tableau, une valeur particulière de $T_{on}$ est adressée par les bits d'adresse (bits de poids faibles) correspondant à la valeur de la tension d'alimentation $U_A$. Une valeur déterminée de T est associée à chaque tableau, c'est-à-dire à chaque température.

Ceci étant, la figure 6 montre comment on peut fonctionnellement représenter la partie du microcontrôleur 90 qui doit élaborer les signaux de commande $T_{on}$ et $T_{off}$ pour l'interrupteur Q.

L'information $T_{on}$ lue dans la mémoire 91 est chargée dans un décompteur 94 tandis que l'information T est chargée dans un décompteur 93. Les décompteurs 93 et 94 reçoivent respectivement les signaux d'horloge H1 et H2 et les signaux de chargement ("Load") L1 et L2.

Un séquenceur général 100 fournit ces divers signaux ainsi que des impulsions de démarrage St à la fréquence de découpage déterminée. Une bascule bistable 96 est commandée d'une part par les impulsions St et d'autre part par les signaux de fin de décomptage du décompteur 94. Le signal de sortie de la bascule 96 est appliqué à une porte ET 97 dont l'autre entrée reçoit le signal d'autorisation indiquant que la tension $U_{HT}$ reçue par le microcontrôleur 90 sous forme numérique est inférieure à la tension de consigne. Enfin un séquenceur "$T_{off}$ fixe" 95 reçoit le signal de fin de décomptage du décompteur 93 et fournit des signaux de commande au multiplexeur 11 et au convertisseur 8' ainsi que des impulsions de synchronisation au séquenceur 100.

Le fonctionnement est le suivant. Le séquenceur 100 ayant commandé le chargement des valeurs T et $T_{on}$ actuelles venant de la mémoire 91 dans les décompteurs 93 et 94 fournit alors un signal de démarrage St qui autorise le décomptage par les deux décompteurs et qui fait passer la bascule 96 au niveau haut. Le décompteur 94 va décompter pendant un intervalle de temps égal à $T_{on}$ à la fin duquel il fournit un signal remettant la bascule 96 au niveau bas. La bascule 96 délivre donc une impulsion de durée $T_{on}$. Cette impulsion est transmise comme signal de commande de fermeture de l'interrupteur Q vers l'étage tampon 92 par l'intermédiaire de la porte 97 si le signal d'autorisation est présent, c'est-à-dire si la haute tension de sortie n'a pas encore atteint la valeur de consigne.

Pendant ce temps, le décompteur 93 décompte également. Au bout d'un temps T après le signal St, le décompteur 93 fournit un signal de démarrage au séquenceur 95. Celui-ci va alors délivrer les signaux de commande nécessaires au multiplexeur 11 et au convertisseur 8' pour que ceux-ci fournissent les informations numérisées de tension d'alimentation $U_A$, de température θ et de tension $U_{HT}$ pendant l'intervalle "$T_{off}$ fixe". A la fin de cet intervalle, le séquenceur 95 fournit un signal de synchronisation au séquenceur général 100 qui génère alors un nouveau signal de démarrage St pour une nouvelle période de découpage.

Il est bien clair que de tels moyens de commande numérique permettent une grande souplesse de fonctionnement. Ceci peut être illustré sous un aspect particulier par les diagrammes de la figure 8.

Cette figure 8 montre sur un axe des tensions d'alimentation $U_A$ différentes valeurs possibles de cette tension entre zéro et une valeur maximum $U_S$ au-delà de laquelle le convertisseur analogique-numérique 8' délivre toujours la même valeur égale à $U_S$.

Dans un premier mode de fonctionnement F1, on peut décider que le convertisseur basse tension-haute tension selon l'invention n'est autorisé à fonctionner que dans les conditions nominales, entre les valeurs U2 et U3, ceci étant symbolisé par des hachures verticales. A l'intérieur de ces limites, on peut déterminer des temps $T_{on}$ permettant de respecter le temps de charge total du condensateur et le taux de charge des composants du convertisseur. En dehors de ces limites, le convertisseur ne doit pas fonctionner ce qui est symbolisé sur la figure par des tirets entre 0 et U2 et au-delà de U3. Ceci peut être réalisé en inscrivant des zéros pour $T_{on}$ dans la mémoire 91 dans toutes les positions correspondant à des valeurs de $U_A$ en dehors de la plage U2-U3.

Une plus grande flexibilité est observée dans le mode de fonctionnement F2. Dans ce second mode, on définit de part et d'autre de la zone nominale U2-U3, des zones de fonctionnement dégradé mais autorisé, symbolisées par des signes +. Dans ces zones, on n'obtient plus des performances nominales du convertisseur :

– dans la zone U1-U2, le temps de charge $T_C$ du condensateur est plus long que la valeur nominale ;

– dans la zone U3-U4, on constate une augmentation importante mais jugée acceptable du taux de charge des composants.

Il est clair que les exemples de réalisation décrits ne sont nullement limitatifs de l'invention ; en particulier l'exemple de réalisation de la figure 6 peut être remplacé par tout autre type de réalisation du microcontrôleur sans sortir du cadre de l'invention.

## Revendications

1. Convertisseur basse tension-haute tension du type à retour rapide comportant un transformateur (T) de faible inductance dont le primaire est relié par l'intermédiaire d'un interrupteur (Q) à une source de tension d'alimentation $U_A$ et dont le secondaire est relié aux bornes d'un condensateur (C) par l'intermédiaire d'une diode de redressement (CR), le convertisseur comprenant en outre des moyens de régulation secondaire qui comparent la tension de sortie aux bornes du condensateur (C) à une première tension de consigne et des moyens de régulation primaire qui régulent le temps de fermeture $T_{on}$ de l'interrupteur de manière à maintenir sensiblement constante l'énergie primaire accumulée dans le transformateur (T) durant chaque temps de fermeture $T_{on}$, ledit convertisseur étant caractérisé en ce qu'il comporte des moyens de commande numérique (8, 9 ; 11, 8', 90 à 92) régulant en boucle ouverte les temps de fermeture et d'ouverture de l'interrupteur (Q) à partir des informations fournies par lesdits moyens de régulation primaire et secondaire, de manière que le temps de charge total du condensateur (C) jusqu'à ladite tension de consigne soit égal à une valeur fixe prédéterminée.

2. Convertisseur basse tension-haute tension selon la revendication 1, caractérisé en ce que les informations fournies par lesdits moyens de régulation primaire comprennent la valeur de la tension d'alimentation, en ce que les informations fournies par lesdits moyens de régulation secondaire comprennent la valeur de la haute tension de sortie aux bornes du condensateur, en ce que lesdits moyens de commande numérique reçoivent en outre une information de valeur de la température du convertisseur et en ce que lesdits moyens de commande numérique comprennent un convertisseur analogique-numérique (8'), un multiplexeur (11) pour envoyer en multiplex lesdites informations au convertisseur analogique-numérique, une mémoire morte (91) adressée par lesdites informations numérisées par le convertisseur analogique-numérique pour fournir la valeur du temps de fermeture $T_{on}$ de l'interrupteur et un microcontrôleur (90) pour fournir les adresses à ladite mémoire (91) et pour délivrer, à partir des valeurs de temps lues dans ladite mémoire, les valeurs de commande $T_{on}$ et $T_{off}$ finales à l'interrupteur (Q).

3. Convertisseur basse tension-haute tension selon l'une des revendications 1 ou 2, caractérisé en ce que ledit microcontrôleur (90) comprend des moyens générateurs d'intervalle de temps pour déterminer lesdites valeurs de commande $T_{on}$ et $T_{off}$ finales de manière que la période de découpage imposée audit interrupteur soit sensiblement constante.

4. Convertisseur basse tension-haute tension selon la revendication 3, caractérisé en ce que ladite mémoire (91) fournit en outre la valeur d'intervalle de temps T constant pour une température donnée et en ce que lesdits moyens générateurs comprennent des moyens logiques temporels (93 à 97) pour fournir, à partir des valeurs reçues de ladite mémoire, la valeur de commande $T_{on}$ et la valeur de commande $T_{off}$ telle que celle-ci soit la somme d'un premier intervalle de temps fixe prédéterminé correspondant au temps nécessaire pour la fourniture par ledit convertisseur analogique-numérique (8') des informations numérisées de tension d'alimentation, de haute tension de sortie et de température et d'un second intervalle de temps variable qui est la différence entre ledit intervalle de temps T constant et ledit temps de fermeture $T_{on}$.

5. Convertisseur basse tension-haute tension selon la revendication 4, caractérisé en ce que lesdits moyens logiques temporels comprennent un premier décompteur (94) et une bascule bistable (96) pour fournir à partir de la valeur $T_{on}$ fournie par ladite mémoire un signal de durée $T_{on}$ démarrant en synchronisme avec une impulsion de démarrage (St), une porte logique (97) pour transmettre ce signal comme signal de commande $T_{on}$ quand lesdits moyens de régulation secondaire indiquent que la tension de sortie est inférieure à ladite première tension de consigne, et un second décompteur (93) associé à des moyens séquenceurs (95, 100), recevant la valeur dudit intervalle de temps constant T et commandant le fonctionnement du multiplexeur (11) et du convertisseur analogique-numérique (8') ainsi que la fourniture desdites impulsions de démarrage (St).

6. Convertisseur basse tension-haute tension selon l'une quelconque des revendications 1 à 5, caractérisé en ce que lesdits moyens de commande numérique sont prévus pour autoriser le fonctionnement dudit convertisseur seulement dans une gamme de valeurs de tension d'alimentation (U2 à U3 ; U1 à U4 ) prédéterminée.

# Fig.1

# Fig. 2

# Fig.3

# Fig.4

Fig. 5

EP 0 463 892 A1

Séquenceur ~100

H1 H2 L1 L2

De 91 (Fig.5)

T

H1 93 L1

St

Décompteur

$T_{on}$ 94 L2

H2

Décompteur

95

Séquenceur
"$T_{off}$ fixe"

96

Vers 11

Vers 8'

$(U_{HT} < Ref)$

Vers 92

97

**Fig.6**

t

St $T_{on}$ $T_{off}$ var. St

T $T_{off}$ fixe

**Fig.7**

O U1 U2 U3 U4 U$_S$

$U_A$

F1

F2

**Fig.8**

Office européen
des brevets

# RAPPORT DE RECHERCHE EUROPEENNE

Numero de la demande

EP    91 40 1304

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-3 916 281 (OWEN)<br>* le document en entier *<br>--- | 1 | H02M3/335 |
| A | IEEE TRANSACTIONS ON NUCLEAR SCIENCE.<br>vol. NS-29, no. 1, Février 1982, NEW YORK US<br>pages 217 - 220;<br>DROEGE, WESSON & YOST: 'A Compact Modular High Voltage System for Phototube and MWPC Applications '<br>* le document en entier *<br>----- | 1-6 | |

**DOMAINES TECHNIQUES RECHERCHES (Int. Cl.5)**

H02M

Le présent rapport a été établi pour toutes les revendications

| Lieu de la recherche | Date d'achèvement de la recherche | Examinateur |
|---|---|---|
| LA HAYE | 08 OCTOBRE 1991 | VAN DEN DOEL J. |